# DEMANDE DE BREVET EUROPEEN

(11) **EP 1 327 867 A1**
(43) Date de publication de la demande: **16.07.2003**
(21) Numéro de dépôt: 03356002.0
(22) Date de dépôt: 09.01.2003
(51) Int. Cl.: G01G 13/02, B01F 15/04

(54) **Ensemble de dosage en continu de produits pulvérulents ou analogues**

(30) Priorité: 10.01.2002 FR 0200258
(71) Demandeur: Auxiliaire Entreprises, 37500 St Benoit La Forêt (FR)
(72) Inventeur: Blaszczyk, Richard Antoine, 37190 Cheille (FR)
(74) Mandataire: Schouller, Jean-Philippe

(57) **Abrégé**

Cet ensemble comprend au moins deux moyens de dosage (6, 12, 6', 12'), ainsi qu'un unique système (16) à vis de pesée (22), comportant des moyens de contrôle (24, 28) du débit des produits transportés par 1a vis de pesée (22), ainsi que des moyens de contrôle (24, 26, 26') du débit de chacun des produits transportés par les moyens de dosage.

Cet ensemble comprend en outre des moyens de mise en communication (14), reliant les sorties de chacun des moyens de dosage avec une unique entrée (15) du système à vis de pesée (16).

## Description

La présente invention concerne le domaine technique du traitement des produits pulvérulents, ou analogues.

Elle trouve notamment son application aux produits pulvérulents, poudres, aux mélanges granulaires et, de façon plus générale, à tout produit susceptible d'être transporté par un système à vis.

On connaît, par FR-A-2 587 482, un système à vis peseuse, permettant de doser et de peser en continu de tels produits.

Ce système comprend une vis d'entraînement, qui est associée à une trémie de réception, et se trouve reçue dans un tube, formant canon. Il est en outre articulé autour de son centre de gravité, et repose sur une jauge de contrainte.

Un calculateur traite les informations relatives à la masse et à la vitesse, qui lui sont transmises par la jauge précitée, ainsi que par le moteur d'entraînement. Il est par ailleurs prévu une boucle de régulation, permettant de contrôler le débit de produit transporté par la vis.

L'invention se propose d'apporter une amélioration au système à vis, décrit ci-dessus, en lui permettant de traiter plusieurs produits, en mode continu.

L'invention se propose également de réaliser un ensemble de dosage de produits en continu, qui puisse s'affranchir de toute production substantielle de poussières, lors du traitement de ces produits.

A cet effet, elle a pour objet un ensemble de dosage en continu de produits pulvérulents ou analogues, comprenant au moins deux moyens de dosage des produits, ainsi qu'un unique système de transport aval des produits, ce système comprenant une vis d'entraînement, des premiers moyens de contrôle, aptes à contrôler le débit des produits transportés par cette vis d'entraînement, ainsi que des seconds moyens de contrôle, aptes à contrôler le débit de chacun des produits transportés par chacun des moyens de dosage, ledit ensemble de dosage comprenant en outre des moyens de mise en communication reliant les sorties de chacun des moyens de dosage avec une unique entrée du système de transport aval.

Selon d'autres caractéristiques de l'invention :
- les moyens de dosage comprennent plusieurs vis de dosage ;
- il est prévu deux vis de dosage, qui sont logées dans deux couloirs, appartenant à un unique tube, les sorties de ces couloirs débouchant dans les moyens de mise en communication ;
- les moyens de dosage comprennent des distributeurs alvéolaires ;
- les moyens de dosage sont aptes à être déplacés angulairement autour du système à vis de pesée ;
- les moyens de mise en communication sont des moyens de mise en communication étanche ;
- les moyens de mise en communication comprennent un conduit souple ;
- les premiers moyens de contrôle comprennent des moyens permettant de mesurer la masse globale du système et/ou la vitesse de la vis d'entraînement, associés à une première boucle de régulation ;
- les seconds moyens de contrôle comprennent des moyens permettant de mesurer la masse globale du système et/ou la vitesse de la vis d'entraînement, associés à au moins deux boucles de régulation supplémentaires ;
- chaque moyen de dosage est mis en communication avec un moyen d'alimentation correspondant, par exemple une trémie.

L'invention va être décrite ci-après, en référence aux dessins annexés, donnés uniquement à titre d'exemples non limitatifs, dans lesquels :
- les figures 1 et 2 sont des vues, respectivement de face et de dessus, illustrant un ensemble de dosage en continu conforme à un premier mode de réalisation de l'invention ;
- les figures 3 et 4 sont des vues, respectivement de face et de dessus, illustrant un ensemble de dosage en continu conforme à un second mode de réalisation de l'invention ; et
- la figure 5 est une vue de dessus, illustrant un ensemble de dosage en continu conforme à un troisième mode de réalisation de l'invention.

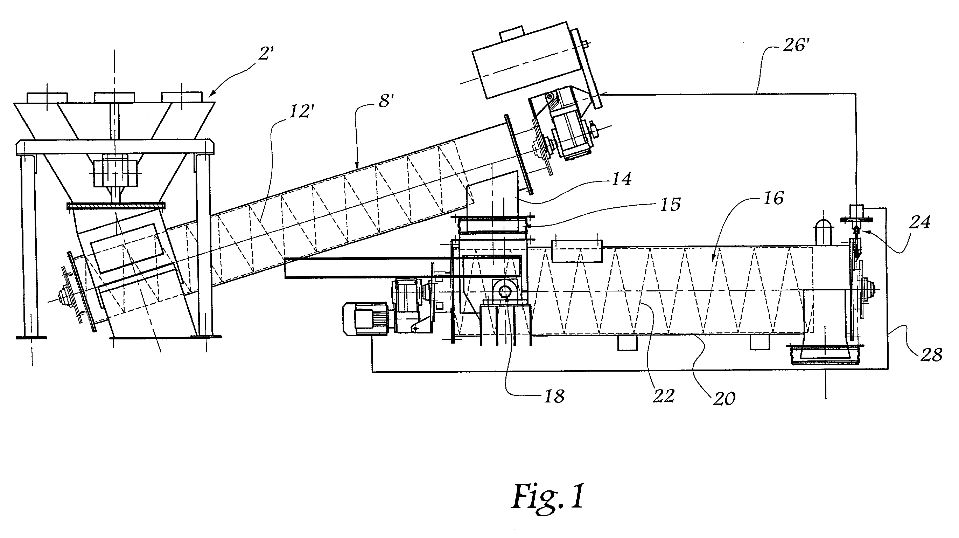

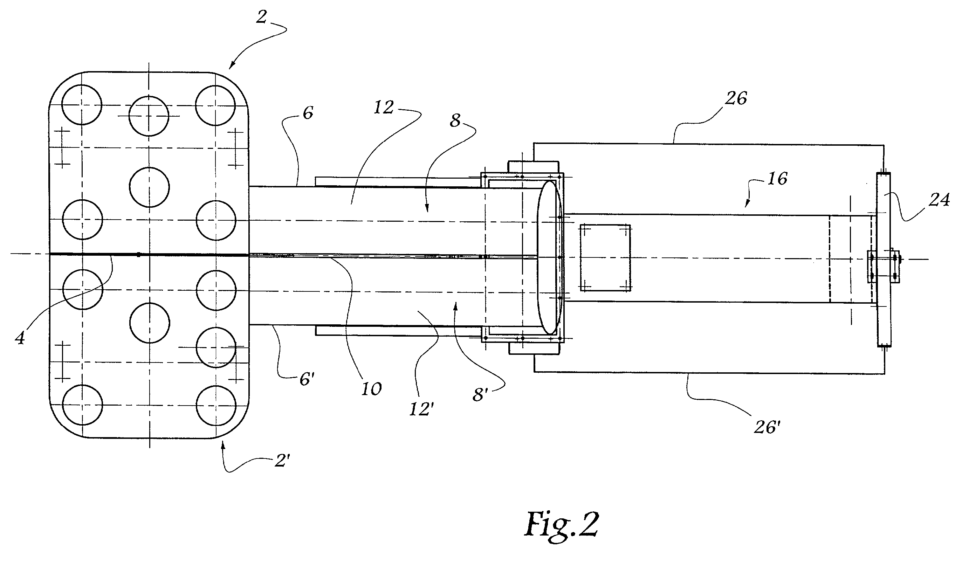

L'ensemble de dosage en continu, illustré aux figures 1 et 2, comprend deux trémies de stabilisation des produits, désignées par les références 2 et 2'. Ces trémies, de type connu en soi, sont séparées par une cloison médiane 4.

Chaque trémie débouche, à son extrémité inférieure, dans un couloir respectif 6, 6'. Ces deux couloirs, qui sont inclinés vers le haut en direction de leur extrémité opposée aux trémies, appartiennent à un unique tube 8, formant canon. Il est en outre prévu une cloison 10, permettant de séparer ces deux couloirs adjacents.

Chaque couloir 6, 6' reçoit une vis doseuse respective 12, 12', permettant le transport de produits à un débit donné, qui peut cependant être modifié. Ces vis de dosage 12, 12', de type connu en soi, sont par exemple conformes à celles commercialisées par la société AUXILIAIRE Entreprises (SAE) sous la référence VIS VP ou VIS ED.

Les extrémités aval des couloirs 6, 6', en faisant référence à la direction des transports des produits, débouchent dans un unique conduit 14. Ce dernier est par exemple réalisé en un matériau souple, tel que du caoutchouc souple du type « parablond », ou bien du silicone.

Ce conduit 14 est mis en communication, à son extrémité aval, à savoir inférieure, avec l'entrée 15 d'un système à vis peseuse, désignée dans son ensemble par la référence 16. Ce système est par exemple conforme à celui décrit dans la demande de brevet français 2 587 482, déposée le 13 septembre 1985, qui est incorporée par référence dans la présente description.

Le conduit 14 relie, de façon étanche, la sortie des vis doseuses 12 à l'entrée du système à vis doseuse 16. ceci signifie qu'aucune perte sensible de produits n'intervient, lors de leur passage de ces vis 12 vers ce système 16.

Le système 16 à vis, qui est articulé en son centre de gravité 18, comprend un tube 20 dans lequel est montée une vis d'entraînement 22. Il comporte également des moyens de mesure, désignés schématiquement par la référence 24, qui reçoivent des informations relatives à la masse globale de ce système 16, fournies par une jauge de contrainte, ainsi que des informations liées à la vitesse de la vis 22, fournies par le moteur d'entraînement de celle-ci.

Un bloc calculateur, non représenté, permet de traiter l'ensemble de ces informations. Par ailleurs, des boucles de régulation 26, 26' permettent de piloter le débit des produits transportés par les vis 12, 12', alors qu'une boucle supplémentaire de régulation 28 permet de piloter le débit des produits transportés par la vis 22.

Le fonctionnement de l'ensemble de dosage des figures 1 et 2 est le suivant.

Il s'agit tout d'abord de traiter le premier produit, reçu dans la première trémie 2. A cet effet, on met en service la première vis de dosage 12, de manière à transporter le produit correspondant.

Ce dernier s'écoule alors, via le conduit unique 14, vers le système 16 à vis de pesée. Les moyens de mesure 24, associés aux boucles de régulation 26, 26' et 28, permettent ensuite de contrôler le débit de ce premier produit, en fonction d'une consigne.

Puis, une fois que la totalité de ce premier produit a été traitée, on arrête la vis 12, puis on met en service la seconde vis doseuse 12', de manière à convoyer le second produit, reçu dans la seconde trémie 2'. Ce dernier s'écoule alors de façon analogue, via le conduit unique 14, en direction du système à vis 16.

Comme décrit précédemment, le débit de ce second produit peut être contrôlé par les moyens de mesure 24, associés aux boucles de régulation 26, 26' et 28.

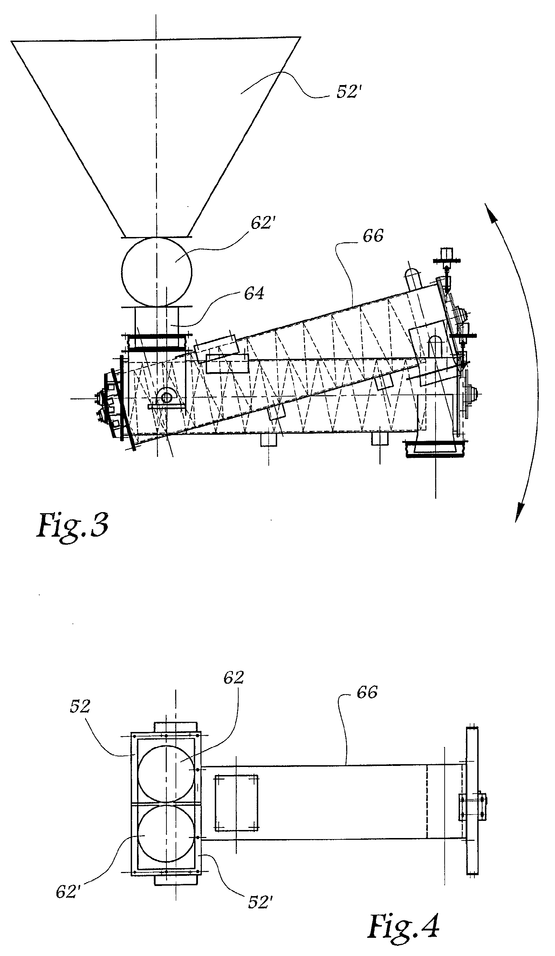

Les figures 3 et 4 décrivent une variante de réalisation de l'invention. L'ensemble de dosage en continu, illustré sur ces figures, comprend deux trémies 52, 52', disposées l'une à côté de l'autre.

Chacune de celles-ci débouche, à son extrémité inférieure, dans un distributeur alvéolaire respectif 62, 62'. Ces distributeurs, de type connu en soi, sont par exemple conformes à ceux commercialisés par la société Auxiliaire Entreprises (SAE) sous la référence DA (Doseur Alvéolaire).

Les sorties de ces distributeurs alvéolaires 62, 62' débouchent dans un unique conduit 64, analogue à celui 14, qui est lui-même mis en communication avec l'entrée d'un système à vis peseuse 66, analogue à celui 16 des figures 1 et 2. La mise en oeuvre de l'ensemble de dosage, représenté aux figures 3 et 4, est similaire à celle de l'ensemble de dosage des figures 1 et 2.

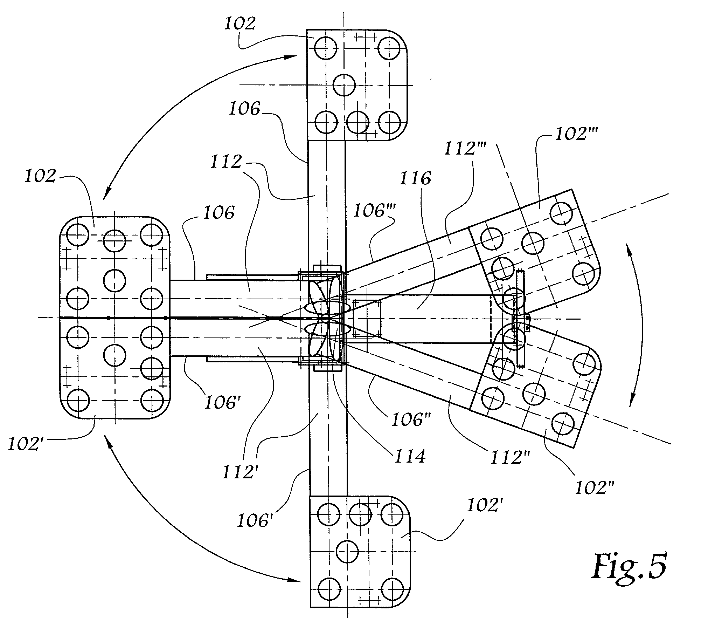

La figure 5 illustre une variante supplémentaire de réalisation de l'invention.

L'ensemble de dosage en continu, qui est représentée, comprend un unique système à vis de pesée 116, analogue à ceux 16 et 66 des figures précédentes. Il est par ailleurs prévu plusieurs trémies stabilisatrices 102, 102', 102'', analogues à celles 2, 2' des figures 1 et 2.

Chaque trémie débouche, à son extrémité inférieure, dans un couloir 106, 106', 106'', 106''', dans lequel est logée une vis de dosage 112, 112', 112'', 112'''. Un unique conduit 114, par exemple réalisé en matériau souple, relie les sorties respectives des couloirs 106, 106', 106'', 106''' avec l'entrée du système à vis de pesée 116.

Pour mettre en oeuvre cet ensemble de dosage, il s'agit tout d'abord de transporter le premier produit, initialement stocké dans la trémie 102, via la vis de dosage 112, le conduit unique 114, puis le système à vis de pesée 116. Ensuite, il s'agit de convoyer, de façon analogue, les autres produits, reçus à l'origine dans les trémies 102', 102" et 102'''.

La variante de réalisation illustrée sur cette figure 5 présente des avantages spécifiques. En effet, les différentes vis de dosage 112, 112', 112'' et 112''', associées à leur trémie respective, peuvent être déplacées angulairement, sans pour autant influencer la qualité du dosage pondéral. Ceci confère une grande modularité à l'ensemble de dosage de cette figure 5.

L'invention n'est pas limitée aux exemples décrits et représentés.

En effet, les différentes vis de dosage, ainsi que les différentes vis de pesage, peuvent être disposées de façon inclinée, ou bien horizontale. Par ailleurs, les différents ensembles de dosage, décrits ci-dessus, peuvent être montés, soit sur une structure fixe, soit sur une structure transférable, par exemple par container, soit sur une structure mobile, susceptible d'être tractée.

L'invention permet de réaliser les objectifs précédemment mentionnés.

En effet, l'ensemble de dosage de l'invention permet le traitement alternatif de plusieurs produits, en mode continu, par l'intermédiaire d'un unique système de vis de pesée.

Par ailleurs, l'invention assure le dosage de matériaux polluants, en supprimant toute production significative de poussières lors de leur manutention, grâce à la présence du conduit étanche 14, 64, 114. Ceci est avantageux, en termes de respect de l'environnement.

## Revendications

1. Ensemble de dosage en continu de produits pulvérulents ou analogues, comprenant au moins deux moyens de dosage des produits (6, 12, 6', 12' ; 62, 62' ; 106, 112, 106' 112', 106'', 112'', 106''', 112'''), ainsi qu'un unique système (16 ; 66 ; 116) de transport aval des produits, ce système (16) comprenant une vis d'entraînement (22), des premiers moyens de contrôle (24, 28), aptes à contrôler le débit des produits transportés par cette vis d'entraînement (22), ainsi que des seconds moyens de contrôle (24, 26, 26'), aptes à contrôler le débit de chacun des produits transportés par chacun des moyens de dosage, ledit ensemble de dosage comprenant en outre des moyens de mise en communication (14 ; 64 ; 114) reliant les sorties de chacun des moyens de dosage avec une unique entrée (15) du système de transport aval (16 ; 66 ; 116).

2. Ensemble selon la revendication 1, **caractérisé en ce que** les moyens de dosage comprennent plusieurs vis de dosage (12, 12' ; 112, 112', 112'', 112''').

3. Ensemble selon la revendication 2, **caractérisé en ce qu'**il est prévu deux vis de dosage (12, 12'), qui sont logées dans deux couloirs (6, 6'), appartenant à un unique tube (8), les sorties de ces couloirs (6, 6') débouchant dans les moyens de mise en communication (14).

4. Ensemble selon la revendication 1, **caractérisé en ce que** les moyens de dosage comprennent des distributeurs alvéolaires (62, 62').

5. Ensemble selon l'une des revendications précédentes, **caractérisé en ce que** les moyens de dosage (112, 112', 112'', 112''') sont aptes à être déplacés angulairement autour du système à vis de pesée (16).

6. Ensemble selon l'une quelconque des revendications précédentes, **caractérisé en ce que** les moyens de mise en communication sont des moyens de mise en communication étanche (14 ; 64 ; 114).

7. Ensemble selon la revendication 6, **caractérisé en ce que** les moyens de mise en communication comprennent un conduit souple (14 ; 64 ; 114).

8. Ensemble selon l'une quelconque des revendications précédentes, **caractérisé en ce que** les premiers moyens de contrôle comprennent des moyens (24) permettant de mesurer la masse globale du système (16) et/ou la vitesse de la vis d'entraînement (22), associés à une première boucle de régulation (28).

9. Ensemble selon l'une quelconque des revendications précédentes, **caractérisé en ce que** les seconds moyens de contrôle comprennent des moyens (24) permettant de mesurer la masse globale du système (16) et/ou la vitesse de la vis d'entraînement (22), associés à au moins deux boucles de régulation supplémentaires (26, 26').

10. Ensemble selon l'une quelconque des revendications précédentes, **caractérisé en ce que** chaque moyen de dosage (6, 12, 6', 12' ; 62, 62' ; 106, 112, 106', 112', 106'', 112'', 106''', 112''') est mis en communication avec un moyen d'alimentation correspondant, par exemple une trémie (2, 2' ; 52, 52' ; 102, 102', 102'', 102''').
